# EUROPEAN PATENT APPLICATION

(11) **EP 2 175 661 A1**
(43) Date of publication of application: **14.04.2010**
(21) Application number: 08253085.8
(22) Date of filing: 19.09.2008
(51) Int. Cl.: H04N 13/00

(54) **Method and apparatus for producing a visual representation of a region**

(71) Applicant: MBDA UK LIMITED, Stevenage, Hertfordshire SG1 2DA (GB)
(72) Inventor: Raz, Guy, California 91361 (GB)
(74) Representative: BAE SYSTEMS plc Group IP Department

(57) **Abstract**

A method of producing a 3-D visual representation of a region (R) comprises the following steps: moving a vehicle (UAV 10) relative to the region, the vehicle carrying a camera system (12) for viewing the region (R), acquiring a first image (I1) of the region by means of the camera system (12), whilst the vehicle (10) is at a first location (L1), moving the vehicle (10) to a second location (L2) spaced apart from the first location (L1), acquiring a second image (I2) of the region (R) by means of the camera system (12), whilst the vehicle (10) is at the second location (L2), and displaying on a display device (18) the first and second images (I1, I2) as a stereographic image. The stereographic image is displayed whilst the vehicle (10) is still moving.

## Description

The present invention relates to producing a visual representation of a region. More particularly, but not exclusively, the invention relates to a method of producing a visual representation of a region, to an image capture and display apparatus and to items of hardware for use in such a method or apparatus. For example, an embodiment of the present invention relates to displaying to a remotely located operator a target region surveyed by an unmanned aerial vehicle (UAV) in the form of a loitering missile.

### Background of the Invention

It is known to capture real-time 2-D images by means of a camera carried by an unmanned aerial vehicle (UAV) and to transmit those images to a remote location for display on a display device. A human operator may then view the images at the remote location. Such a system can be used in connection with loitering airborne munitions to enable an operator to detect, recognise and identify a target. It is thought that the lack of perception of perspective and depth in the 2-D images relayed to the operator make the system difficult to use. The present invention is concerned with a system and method that enables the afore-described real-time display of a 2-D image of a region to be improved by means of displaying a stereographic image.

A known method of producing a stereographic image is to capture simultaneously images with two spaced-apart cameras and using the image captured by one camera as the left image of a stereographic image and the image captured by the other camera image as the right image of the stereographic view. Providing two cameras on board the aircraft to provide a stereographic display for the operator might improve the usefulness of the images displayed to the operator, in comparison to a conventional 2-D system, but would require an extra camera and would only provide a relatively flat stereographic image as a result of the likely small separation of the two cameras on the UAV (in practice very unlikely to be more than 1,000 mm) relative to the separation of the UAV and the intended target (typically of the order of a few kilometres or greater)

WO03/032649 relates to an aerial reconnaissance camera system. A single camera in a moving aircraft rotates fore and aft to capture images of the surrounding terrain in different directions so that, as the aircraft flies past, any given location in the terrain of interest is imaged from two different perspectives. The captured images are stored on a suitable recording medium for subsequent production of stereoscopic images of the terrain. The apparatus of WO03/032649 is thus able to map an area of terrain for subsequent analysis, including production of stereographic images, but can not assist in providing real-time stereographic information concerning a particular region in the terrain being mapped.

The present invention seeks to mitigate the above-mentioned problems. Alternatively or additionally, the present invention seeks to provide an improved method of producing a visual representation of a region.

### Summary of the Invention

The present invention provides a method of producing a visual representation of a region, the method comprising the following steps:
moving a vehicle relative to the region, the vehicle carrying a camera system for viewing the region,
acquiring a first image of the region by means of the camera system, whilst the vehicle is at a first location,
moving the vehicle to a second location spaced apart from the first location,
acquiring a second image of the region by means of the camera system, whilst the vehicle is at the second location, and
displaying the first and second images as a stereographic image having left and
right images, the first image being one of the left and right images and the second image being the other one of the left and right images,
wherein the step of displaying the first and second images as a stereographic image is conducted whilst the vehicle is still moving.

An embodiment of the present invention thus provides a method that enables the real-time display of a stereographic image of a region captured by a camera system carried by a moving vehicle.

The vehicle may be an aircraft. The vehicle may be unmanned. The vehicle may be a UAV (unmanned aerial vehicle).

The camera system may comprise a single camera that acquires both the first image and the second image.

The camera system may comprise a moveable camera, which moves relative to the vehicle between capturing images of the region. The camera may move relative to the vehicle to track the region. Thus, the method may include a step of analysing characteristics of a particular target region and may then move between capturing successive images to track the target region. For example, the position of the target region may be known and the position and orientation of the vehicle relative to the target region may be derived from instrumentation on-board the vehicle and then used to move the camera to acquire an image of substantially the same region but viewed from a different angle. When moving a moveable camera to track a particular target region, one or more distinctive and recognisable features of a target region may be ascertained and then tracked in between capturing successive images of the target region.

The camera system may comprise a static camera, which remains stationary relative to the vehicle between capturing images of the region.

The stereographic image is advantageously displayed at a remote location. The remote location is preferably on the ground. The remote location is preferably remote from both the vehicle and the region being viewed by the camera system.

The vehicle may carry one or more munitions. The vehicle may be in the form of a missile. The present invention has particular application when the vehicle is a loitering missile. In such a case, the region being viewed will typically be in the form of a potential target.

The method may include a step of altering at least one of the first and second images before it is displayed as part of the stereographic image. In the case where the image vectors of the first and second images are at significantly different angles, the resultant stereoscopic image can appear to have an artificial curvature or distortion. This curvature or distortion can be reduced by transforming one or both images to reduce the apparent angle between the image vectors as perceived by the person viewing the images as a stereoscopic image. This may be achieved by transforming one or both images with reference to a pointing vector, representing a notional direction of viewing. An affine image transformation may be sufficient to effect any necessary transformation, otherwise a full perspection transformation could be applied. Other, different transformations could alternatively, or additionally, be applied. (It will be understood that in the present context, the "image vector" of a captured image is the direction of viewing of the camera in respect of that captured image.)

The step of altering the image(s) may include increasing the overlap between the first and second images. In order to achieve this, the image acquired by the camera may cover an area significantly larger than that displayed in the stereographic image so that the areas of the first and second images not in common may be cropped. Cropping one or both of the images in this manner may allow the effects of unintentional camera movement (for example vibration) to be reduced.

The step of altering the image(s) may include rotating one or both of the first and second images to reduce the difference, if any, between the twist angle of the first and second images. (It will be understood that in the present context, the "twist angle" of a captured image is a measure of the angular position of the camera about the image vector of that captured image.) Again, in order to achieve this, the images acquired by the camera may cover an area significantly larger than that displayed in the stereographic image to enable the images to be transformed without reducing the size of the stereographic image displayed.

The method preferably includes displaying successive stereographic images of the region viewed by the camera system as the vehicle moves relative to the region. The successive stereographic images may be displayed at a rate greater than 2Hz, preferably at a rate of 10Hz or greater. The successive stereographic images are preferably displayed substantially in real-time. Thus, there is preferably a delay of less than one second between acquiring an image with the camera system and subsequently using that image (or a transformed version of the image) in the display of a corresponding stereographic image.

It will be appreciated that in order to provide a succession of real-time stereographic images of a region, a succession of images need to be acquired as the vehicle moves relative to the region. Thus, the method may include the further steps of moving the vehicle to a third location and then acquiring, with the camera system, a third image of the region. The stereoscopic image displayed may then be updated by displaying the third image and one of the first and second images.

If the stereographic image comprising the first and second images is considered as the first stereographic image, then the stereographic image comprising the third image and one of the first and second images may be considered as the second stereographic image. Preferably, the second stereographic image is displayed immediately after the first stereographic image has been displayed. The second stereographic image may comprise the second and third images. The second image may be used as one of the right and left images in the first stereographic image and as the other of the right and left images in the second stereographic image. Each of the stereographic images displayed may utilise images that are not acquired one immediately after the other. For example, a stereographic image may be displayed using a pair of images acquired at different times between which other images are acquired for display in other stereographic images. Intervening images may for example be acquired between acquiring the first and second images (and/or between the second and third images). Such intervening images may be displayed in subsequent stereographic images.

Preferably, fourth and subsequent images are acquired at further different locations and are similarly used to display successive stereographic images. Thus, the method may include further steps of moving the vehicle to a fourth location spaced apart from each of the first to third locations, acquiring a fourth image of the region by means of the camera system, whilst the vehicle is at the fourth location, and displaying the third and fourth images as a stereographic image having left and right images, the left image being one of the third and fourth images and the right image being the other one of the third and fourth images.

Each image acquired may be used as a left and a right image, respectively, of two successive stereographic images that are displayed. Alternatively, each image may be used as either the left image or the right image of two successive stereographic images that are displayed.

The vehicle may have a speed greater than 20ms⁻¹. The speed may be less than 300ms⁻¹.

The images acquired by the camera system preferably have image vectors that are transverse to the direction of motion of the vehicle (i.e. including, but not being limited to, being exactly perpendicular to each other). The distance between the camera system and the region being viewed may be greater than 1,000m. The distance between the locations at which the camera system acquires the images of the region which are used in a single stereographic image may be more than 50m (preferably 100m or more). The vehicle may circumnavigate the region being viewed by the camera system. The method may for example include a step of the vehicle moving in circuits, for example loops such as substantially circular loops, around the region. The or each circuit may extend for more than 1,000m.

The present invention also provides an image capture and display apparatus suitable for use in the method of the invention. The apparatus thus includes a camera system for mounting on a moving vehicle and a display device for displaying stereographic images. The apparatus may also include a transmitter arranged for connection to the camera system and a receiver arranged for connection to the display device. In use, when successive images of a region are acquired by the camera system whilst on a moving vehicle, the images (for example, digital data representative of the images) may thus be sent from the vehicle, via the transmitter and the receiver, to the display device.

The apparatus may also include a control unit arranged to cause successive images of the region acquired by the camera system to be displayed as stereographic images by the display device, whilst the vehicle is still moving. The control unit is preferably arranged to be local to the display device, but may alternatively be positioned on the vehicle. There may be control means local to both the camera system and to the display device. The control means may be arranged to perform image processing steps to improve the stereographic image to be displayed. The control means may thus be arranged to receive other data to enable the control means to perform such image processing steps. Such data may for example include positional data derived from systems onboard the vehicle.

The apparatus may further include a switch arranged to cause switching of the display device between display of stereographic images by the display device and display of a 2-dimensional image display by the display device. The 2-D image may be provided by displaying only one image at a time, or by displaying two identical left and right images. The ability to switch between a 2-D image display, which may be familiar to a given human operator, and a 3-D image which may be unfamiliar to the operator but carry more information may enhance the usefulness and usability of the apparatus. The apparatus may thus provide all the functionality of a legacy system as well as the enhancements made possible by means of the present invention.

The present invention also provides a camera system and transmitter arranged for use in the image capture and display apparatus of the present invention. The camera system and transmitter may for example be arranged to acquire and transmit a first image of a region to be viewed and then, after the vehicle on which they are provided has moved to a different location, acquire and transmit a second image of the region. The camera system and transmitter may be so arranged that the first and second images are accompanied by data enabling subsequent transformation of the images to improve the stereographic image to be displayed. The camera system and transmitter may be so arranged that the first and second images are transformed, prior to transmission by the transmitter, to improve the stereographic image to be displayed. The camera system and transmitter may be provided on an aircraft, for example a UAV.

The present invention further provides a display device and receiver arranged for use in the image capture and display apparatus of the present invention. The display device and receiver may for example be arranged to receive successive images from a transmitter and sequentially display successive stereoscopic images, substantially in real-time. The display device and receiver may be so arranged to received with the images data and to use such data to transform the images to improve the stereographic images subsequently displayed. Such image transformation may be performed by a control unit local to the display device and receiver. A local control unit may be used simply to control which images are displayed as the left and right images of the stereographic images displayed.

The present invention yet further provides a control unit arranged for use in the image capture and display apparatus of the present invention. The control unit may be arranged to be local to the camera system. The control unit may be arranged to be local to the display device. The control unit may be arranged to perform image transformation as described in relation to the method of the present invention.

It will be appreciated that aspects of the present invention described in relation to the apparatus of the present invention are equally applicable to the method of the present invention and vice versa. Thus, for example, the control unit of the present invention may possess those features which would enable the control unit to perform the function of the control unit of the apparatus of the present invention or may be arranged to control integers of the apparatus of the invention to cause them to perform certain steps of the method of the present invention.

### Description of the Drawings

By way of example an embodiment of the invention will now be described with reference to the accompanying schematic drawings, of which:
Figure 1 shows a UAV with camera system and a ground-based display device according to a first embodiment of the invention,
Figure 2 shows the camera system of the UAV of Fig. 1 acquiring two successive images,
Figure 3 shows schematically how images acquired by the camera system of the UAV of Fig. 1 are displayed,
Figure 4 shows schematically a first alternative method of displaying the images acquired by a camera system of a UAV according to a second embodiment of the invention, and
Figure 5 shows schematically a second alternative method of displaying the images acquired by a camera system of a UAV according to a third embodiment of the invention.

### Detailed Description

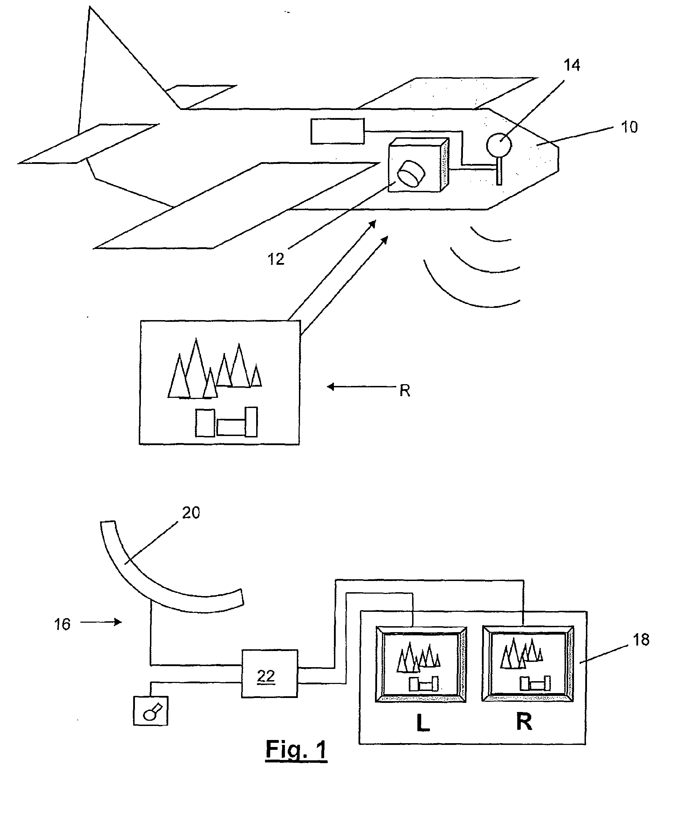

The embodiments of the invention illustrated by the accompanying drawings concern displaying to a remotely located operator a stereographic image of a target region R surveyed by an unmanned aerial vehicle (UAV) in the form of a loitering missile. Thus, Figure 1 shows a UAV 10 on board which there is provided a camera system 12. The camera system 12 comprises a single camera which is mounted for movement to track and acquire images of a target region R on the ground, typically about 1-2Km from the UAV 10. The UAV 10 also carries a radio transmitter 14 for transmitting data, including digital images, from the UAV 10 to a ground station 16 at a location remote from the target region R. The ground station 16 will typically be at a location spaced apart from the target region R by at least 1km.

At the ground station 16, there is provided a display device 18 for displaying stereographic images. In this embodiment, the display device 18 is in the form of a virtual reality headset having two display screens, mounted in a helmet to be worn by the operator so that one display screen is viewed by the left eye and the other display screen is viewed by the right eye. The display device 18 is connected to a radio receiver 20 for receiving data from the transmitter 14 on the UAV 10. The display apparatus at the ground station 16 also includes a control unit in the form of a computer 22. The computer 22 receives both digital images from the camera system 12 (via the transmitter 14 and receiver 20) and data concerning the orientation of the camera, the position and orientation of the UAV 10. The computer 22 processes the images and data to produce successive pairs of left and right images for display on the stereographic display device 18. The images are displayed substantially in real-time, and are thus displayed whilst the UAV 10 is moving.

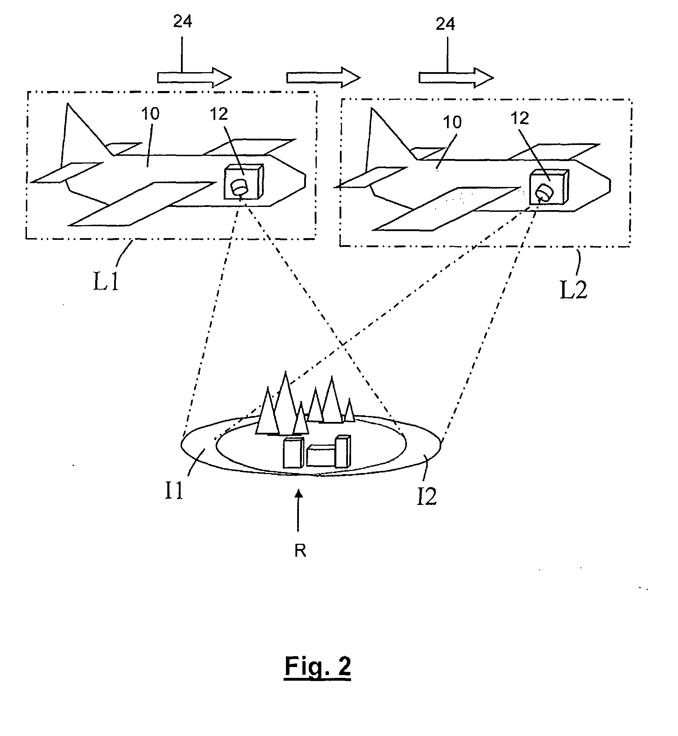

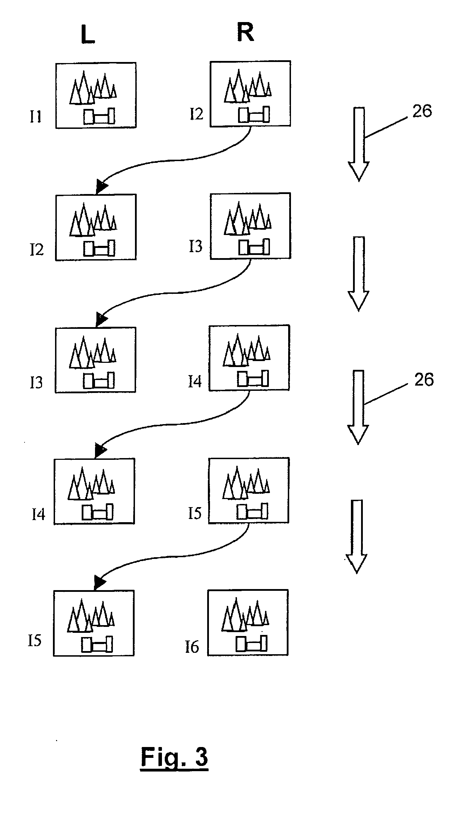

The basic principles of operation of the apparatus of the first embodiment will now be described with reference to Figs 2 and 3. In use, the UAV 10 and the associated camera system 12 move relative to the target region R, in the direction illustrated by arrows 24 in Figure 2. The camera system 12 acquires a first image l1 encompassing the target region R, whilst the UAV 10 is at a first location L1. The image is taken such that the image vector is transverse to the velocity vector of the UAV 10.

About a tenth of a second later, the camera system 12 subsequently acquires a second image l2 encompassing the target region R, at which time the UAV 10 is at a second location L2, spaced apart from the first location, typically by a distance of the order of 15m (the UAV having a speed of 150 ms ¹). The process continues as the UAV 10 continues to fly circuits around the target region R (and keeping the target region R in view of the camera system 12). Thus, the camera system 12 acquires a third image l3, a fourth image l4, a fifth image 15, and so on. As shown schematically in Figure 3, the images l1, l2, 15, etc are displayed two at a time, one image being displayed for viewing by the left eye (the column of images headed with the letter "L") and one image being displayed for viewing by the right eye (the column of images headed with the letter "R"). The passage of time is depicted in Figure 3 by means of the arrows 26. Successive pairs of images are displayed about once every tenth of a second (at a rate of about 10Hz).

Initially, the first and second images l1 , l2 acquired are displayed as a stereographic image. The stereographic image comprises a left-hand image and a right-hand images. In this embodiment, the first image l1 is the left image and the second image l2 is the right image. Subsequently, the second and third images l2, l3 are displayed as a stereographic image, with the second image l2 being the left image and the third image l3 being the right image. The process continues by loading a new image as the right image, and replacing the left image with the immediately preceding right image.

It will of course be appreciated that the images could be displayed in the opposite order so that the new image is loaded as the left image, the right image is replaced with the immediately preceding left image. The order in which the images are displayed on the left and right display panels of the stereographic display device 18 may depend on whether the camera system 12 views the target from the starboard side or the port side of the aircraft. In the present embodiment, the region R is kept in view of the camera system 12 for at least the majority of each circuit and the camera is arranged to view only to the starboard side of the UAV 10.

Further details concerning the first embodiment will now be described.

In order to enable the camera to track the target region R whilst the UAV 10 moves past the region R, the camera system 12 includes control unit (not shown separately) that receives data from the UAV 10 onboard systems concerning the position and orientation of the UAV 10 relative to a fixed coordinate system. The control unit also receives data concerning the orientation of the camera of the camera system 12. The control unit is also provided with information concerning the position of the target region R relative to the fixed coordinate system. The control unit is arranged to process such data and to calculate the movement necessary to move the camera so that it views the target region R, albeit from a different angle, given that the UAV 10 will have moved to a new location.

The control unit (computer 22) at the ground station 16 is arranged to perform image processing before the images captured by the camera system 12 are displayed on the display device 18. The images are corrected to reduce perceived distortion due to different image vectors, to ensure that both the left and right images relate to substantially the same area (increase/maximise overlap between the images), and to correct for image stabilisation.

The images may appear to be distorted if the left and right images were captured by the camera at significantly different viewing angles. This distortion is reduced by transforming both images to minimise the apparent angle between the image vector of the image and a notional pointing vector. The notional pointing vector in this embodiment is the average of the two image vectors of the left and right images. (It will be appreciated that the pointing vector may be smoothed over time to reduce the amount of wobble perceived in the images.)

The images are also cropped both to increase the overlap between the images and to stabilise the images displayed over time to the operator. The parts of the images left after cropping should of course include the target region R. It will be appreciated that it may not be possible to acquire successive images of the target region R that relate to exactly the same geographical area and that the overlap between successive images will typically be less than 100%. Also, successive images may be captured at different altitude, different distance from the target, and different twist angle of viewing. The variations over time of such variable may be smoothed by suitable image processing, which will act to reduce image wobble and distortion.

In the present embodiment the images acquired by the camera system 12 are larger (capturing more geographical area in each image) than the images that are displayed to enable the image processing as described above to be conducted.

The image processing that is conducted before displaying the captured image introduces a slight delay between capture of the image and subsequent display as a stereographic images. Also, because only one of the pair of images displayed is updated at a time, the stereographic image will include an image that was acquired at least a tenth of a second before display. However, in this embodiment, the delay between acquiring and displaying the images is less than half a second and the successive stereographic images are thus displayed substantially in real-time.

The apparatus further includes a switch connected to the control unit (computer 22) at the ground station 16 for enabling an operator to switch between a 3-D display mode and a 2-D display mode. The 2-D display mode is provided simply by means of displaying identical images as the left and right images of the stereographic display device 18.

In the first embodiment, each image acquired is used as a left and a right image, respectively, of two successive stereographic images that are displayed, as illustrated by Figure 3.

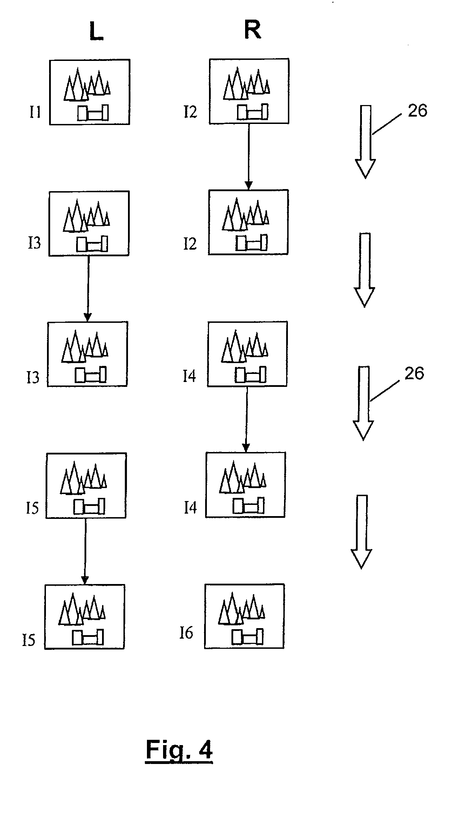

As an alternative, however, each image may be used as exclusively the left image or the right image of two successive stereographic images that are displayed. Such an alternative is illustrated with reference to Figure 4. Initially, the first and second images l1, l2 acquired are displayed as a stereographic image. The first image l1 is the left image and the second image l2 is the right image. Subsequently, the second and third images l2, l3 are displayed as a stereographic image, with the second image l2 remaining as the right image and the third image l3 being the left image. The process continues by loading a new image (fourth image l4 as a new right image), and retaining the third image as the left image. Then the left image only is replaced, then the right image only is replaced and so on. Thus, only one image is changed per cycle, the image being changed alternating between left and right. Such an alternative embodiment may be useful if screen refresh rates become a limiting factor.

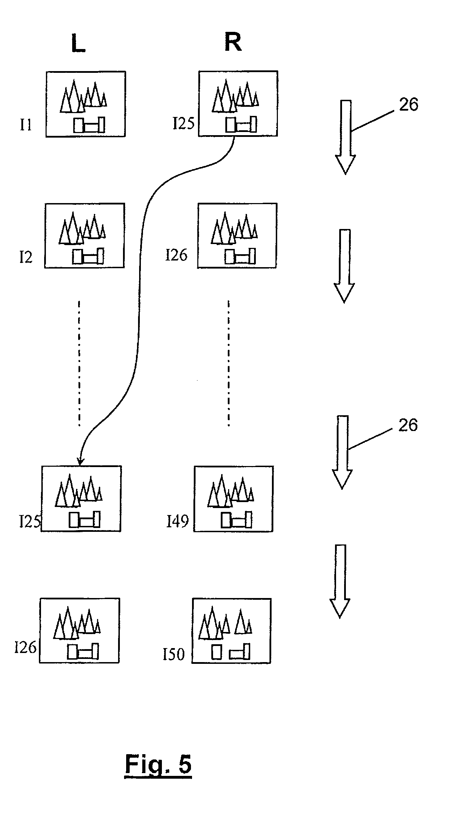

With reference to Figure 3, if images are acquired at a rate of 50Hz, but the vehicle speed is only 50ms⁻¹, the spatial separation (viewing position) of subsequently acquired images would only be 1 metre. The stereographic image displayed using successively acquired images would lack depth. In such a case it may be better if the 1^{st} and the 25^{th} images were displayed. However, simply displaying only every 25^{th} image would result in a display rate of 2Hz. In the alternative embodiment illustrated schematically in Figure 5, the intervening images are also displayed. Thus, the acquired images used in the stereographic display are separated, in time, by a plurality of other acquired images, resulting in an interleaved sequence of images. The two displayed images are separated by a number of frames, which may be varied, for example in dependence on vehicle speed. In the sequence shown in Figure 5, the images displayed are the 1^{st} and 25^{th} images, then the 2^{nd} and 26^{th} images, etc. so that the display rate is maintained at 50Hz. This alternative display method thus provides a useful way of displaying stereographic images with a high refresh rate whilst ensuring that the left and right images are acquired by the vehicle when at two sufficiently spaced-apart locations to give enhanced perspective (better 3-D view) in the stereographic image displayed. Thus for a UAV travelling at 50ms⁻¹, with images acquired at a rate of 50Hz, the vehicle moves just 1 metre between successive images. Using the 1^{st} and 101^{st} images, and then the 2^{nd} and 102^{nd}, and so on, to produce the stereographic images allows for a fast refresh rate (50Hz) using images captured at positions 100m apart with a UAV travelling at a relatively low speed.

In use of the apparatus of the first embodiment of the invention an operator may select a target and program the UAV 10 with positional information concerning the target and the UAV 10 may then navigate to the target and then loiter in the region R of the target. Stereographic images of the region R surrounding and including the target are then viewed by the operator, including images taken from differing angles and perspectives. The target may then be verified by the operator, and control signals may be sent from the ground station 16 to the UAV 10 to take appropriate action (via a transmitter on the ground and a receiver on the UAV 10).

Whilst the present invention has been described and illustrated with reference to particular embodiments, it will be appreciated by those of ordinary skill in the art that the invention lends itself to many different variations not specifically illustrated herein. By way of example only, certain possible variations will now be described.

When moving the moveable camera to track a particular target region, one or more distinctive and recognisable features of a target region may be ascertained and then tracked in between capturing successive images of the target region. Such a system may negate the need for reliance on positional date from the onboard systems of the UAV.

The camera system may be arranged to view selectively to the port or starboard side of the vehicle, rather than being limited to one side only. Two cameras may be provided for such a purpose, one dedicated to viewing from the port side and one dedicated to viewing from the starboard side.

The camera system may comprise a static camera, which remains stationary relative to the vehicle between capturing images of the region.

Rather than transmitting data with the images for image processing by a computer on the ground, the control on the UAV may be arranged to process the images before transmission, thereby reducing the bandwidth of data that needs transmitting from the UAV to the ground station.

The stereoscopic viewer may be of a form other than a virtual reality head-set. For example, the display device may produce pairs of differently polarised images and the operator may wear glasses with polarised lenses that separate out the left and right images for viewing by the operator.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of producing a visual representation of a region, the method comprising the following steps:
moving a vehicle relative to the region, the vehicle carrying a camera system for viewing the region,
acquiring a first image of the region by means of the camera system, whilst the vehicle is at a first location,
moving the vehicle to a second location spaced apart from the first location,
acquiring a second image of the region by means of the camera system, whilst the vehicle is at the second location, and
displaying the first and second images as a stereographic image having left and right images, the first image being one of the left and right images and the second image being the other one of the left and right images,
wherein the step of displaying the first and second images as a stereographic image is conducted whilst the vehicle is still moving.

2. A method according to claim 1, wherein the vehicle is an unmanned aerial vehicle.

3. A method according to claim 1 or claim 2, wherein a single camera acquires both the first and second images.

4. A method according to any preceding claim, wherein the camera system comprises a moveable camera, which moves relative to the vehicle between capturing images of the region.

5. A method according to any of claims 1 to 3, wherein the first and second images are each acquired by a camera, which remains stationary relative to the vehicle between capturing images of the region.

6. A method according to any preceding claim, wherein the stereographic image is displayed at a location remote from both the region and the vehicle.

7. A method according to any preceding claim, wherein the method includes a step of altering at least one of the first and second images before it is displayed as part of the stereographic image.

8. A method according to claim 7, wherein the step of altering the image includes reducing the apparent angle between the image vectors of the first and second images.

9. A method according to claim 7 or claim 8, wherein the step of altering the image includes increasing the overlap between the first and second images.

10. A method according to any preceding claim, wherein the method further comprises the following steps:
moving the vehicle to a third location spaced apart from the first location and spaced apart from the second location,
acquiring a third image of the region by means of the camera system, whilst the vehicle is at the third location, and
displaying the third image and one of the first and second images as a stereographic image having left and right images.

11. A method according to any preceding claim, wherein the method includes displaying successive stereographic images, the successive images being displayed at a rate greater than 2Hz.

12. An image capture and display apparatus comprising:
a camera system for mounting on a moving vehicle,
a transmitter connected to the camera system,
a display device,
a receiver connected to the display device, and
a control unit, wherein
the apparatus is arranged such that, in use, successive images of a region acquired by the camera system whilst on a vehicle moving relative to the region are sent via the transmitter and the receiver for display on the display device, and
the control unit is arranged to cause the successive images of the region to be displayed as stereographic images by the display device, whilst the vehicle is still moving.

13. An apparatus according to claim 12, wherein the apparatus further includes a switch arranged to cause switching of the display device between display of stereographic images by the display device and display of a 2- dimensional image display by the display device.

14. A camera system and transmitter arranged for use in the image capture and display apparatus of claim 12 or claim 13.

15. An aircraft including a camera system and transmitter according to claim 14.

16. A display device and receiver arranged for use in the image capture and display apparatus of claim 12 or claim 13.

17. A display device, receiver and control unit arranged for use in the image capture and display apparatus of claim 12 or claim 13.

18. A control unit arranged for use in the image capture and display apparatus of claim 12 or claim 13.
